(19) Europäisches Patentamt / European Patent Office / Office européen des brevets

(11) **EP 2 340 233 B1**

(12) **FASCICULE DE BREVET EUROPEEN**

(45) Date de publication et mention de la délivrance du brevet:
**28.05.2014 Bulletin 2014/22**

(21) Numéro de dépôt: **09786173.6**

(22) Date de dépôt: **25.08.2009**

(51) Int Cl.:
*H01M 4/32* *(2006.01)*        *H01M 4/36* *(2006.01)*
*H01M 4/525* *(2010.01)*      *H01M 4/62* *(2006.01)*
*H01M 10/30* *(2006.01)*     *C01G 51/00* *(2006.01)*
*C01G 53/00* *(2006.01)*      *H01M 4/02* *(2006.01)*

(86) Numéro de dépôt international:
**PCT/IB2009/006626**

(87) Numéro de publication internationale:
**WO 2010/023531 (04.03.2010 Gazette 2010/09)**

(54) **OXYDE LITHIÉ POUR ÉLECTRODE POSITIVE D'ACCUMULATEUR ALCALIN**

LITHIIERTES OXID FÜR DIE POSITIVELEKTRODE EINER ALKALIBATTERIE

LITHIATED OXIDE FOR A POSITIVE ELECTRODE OF AN ALKALI BATTERY

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **29.08.2008 FR 0804757**

(43) Date de publication de la demande:
**06.07.2011 Bulletin 2011/27**

(73) Titulaire: **Saft Groupe S.A.**
**93170 Bagnolet (FR)**

(72) Inventeurs:
• **BERNARD, Patrick**
  **33000 BORDEAUX (FR)**
• **NAJEAN, Rémi**
  **16410 SERS (FR)**
• **GOUBAULT, Lionel**
  **33360 CARIGNAN DE BORDEAUX (FR)**

(74) Mandataire: **Hirsch & Associés**
**58, avenue Marceau**
**75008 Paris (FR)**

(56) Documents cités:
| | |
|---|---|
| EP-A- 0 866 510 | EP-A- 1 022 793 |
| EP-A- 1 111 701 | EP-A- 1 927 581 |
| JP-A- 9 259 878 | JP-A- 10 001 316 |
| JP-A- 11 238 507 | JP-A- 11 260 359 |
| JP-A- 2005 123 180 | JP-A- 2008 103 308 |
| US-A- 6 017 655 | US-A1- 2004 091 778 |
| US-A1- 2004 175 618 | |

• P. KALYANI ET AL.: "A new solution combustion route to synthesize LiCoO2 and LiMn2O4" JOURNAL OF POWER SOURCES, vol. 111, no. 2, 23 septembre 2002 (2002-09-23), pages 232-238, XP004381131 ISSN: 0378-7753
• I.H. OH ET AL.: "Low-temperature preparation of ultrafine LiCoO2 powders by the sol-gel method" JOURNAL OF MATERIALS SCIENCE, vol. 32, no. 12, 15 juin 1997 (1997-06-15), pages 3177-3182, XP000704259 ISSN: 0022-2461
• Y.K. SUN ET AL.: "Synthesis of ultrafine LiCoO2 powders by the sol-gel method" JOURNAL OF MATERIALS SCIENCE, vol. 31, no. 14, 15 juillet 1996 (1996-07-15), pages 3617-3621, XP000599896 ISSN: 0022-2461
• S.M. LALA ET AL.: "LiCoO2 sub-microns particles obtained from micro-precipitation in molten stearic acid" JOURNAL OF POWER SOURCES, vol. 124, no. 1, 1 octobre 2003 (2003-10-01), pages 118-123, XP004454601 ISSN: 0378-7753
• C. TESSIER ET AL.: "A conductive additive for positive electrodes of alkaline batteries" JOURNAL OF THE ELECTROCHEMICAL SOCIETY, vol. 152, no. 6, 12 mai 2005 (2005-05-12), pages A1248-A1264, XP002569104 ISSN: 0013-4651 cité dans la demande

## Description

DOMAINE TECHNIQUE

L'invention se rapporte au domaine technique des générateurs électrochimiques secondaires (accumulateurs) à électrolyte alcalin, en particulier aux accumulateurs nickel-cadmium (NiCd) ou nickel-métal hydrure (NiMH).

ETAT DE LA TECHNIQUE

Les électrodes non frittées au nickel utilisées comme électrode positive dans les accumulateurs à électrolyte alcalin offrent une densité d'énergie plus élevée que les électrodes frittées au nickel. Elles sont également plus simples à fabriquer.

Une électrode au nickel non frittée comprend typiquement un support servant de collecteur de courant sur lequel on enduit une pâte contenant une matière électrochimiquement active encore appelée matière active, un liant, et le plus souvent un matériau conducteur. Une fois la pâte déposée sur ou dans le support, l'ensemble est comprimé et séché pour obtenir une électrode de la densité et de l'épaisseur souhaitée.

Le support collecteur de courant d'une électrode non frittée peut être tridimensionnel. Un support tridimensionnel typique consiste par exemple en une mousse de nickel. Le support collecteur peut également être bidimensionnel. On peut citer comme support bidimensionnel, une plaque de métal, une feuille de métal perforé ou de métal déployé.

La matière active de l'électrode au nickel est constituée d'un hydroxyde à base de nickel. L'hydroxyde de nickel est un composé peu conducteur qui nécessite l'adjonction dans l'électrode d'un matériau permettant une bonne percolation électrique. La pâte contient donc généralement un matériau conducteur qui peut être par exemple un composé de cobalt tel que du cobalt métallique Co, un hydroxyde de cobalt $Co(OH)_2$, ou un oxyde de cobalt CoO.

Lors de la première charge de l'accumulateur alcalin, les composés de cobalt sont oxydés en oxyhydroxyde de cobalt CoOOH dans lequel le cobalt est porté au degré d'oxydation supérieur ou égal à 3. Cet oxyhydroxyde de cobalt est stable dans le domaine normal de fonctionnement de l'électrode positive au nickel et insoluble dans l'électrolyte alcalin. Toutefois, pour un stockage prolongé, c'est-à-dire dont la durée dépasse quelques mois, la tension de l'accumulateur alcalin tend vers 0 V. Dans ces conditions, l'oxyhydroxyde de cobalt n'est plus stable et se réduit lentement. Le cobalt est porté au degré d'oxydation +2,66 dans $Co_3O_4$, puis il atteint un degré d'oxydation +2 dans $Co(OH)_2$. Or, l'hydroxyde de cobalt $Co(OH)_2$ est un composé très soluble dans l'électrolyte alcalin. Par conséquent, on observe, une perte de capacité de l'accumulateur alcalin due à la dissolution partielle du réseau percolant de l'électrode non frittée. Il en résulte une perte irréversible de capacité de l'accumulateur qui peut dépasser 15%. Cette perte irréversible se produit quel que soit le composé de cobalt actuellement introduit dans la pâte.

Dans la demande de brevet européen EP-A-0866510, il est proposé d'utiliser un composé de cobalt conducteur fortement lithié de type $Li_xCoO_2$ avec x compris entre 0,2 et 0,9. Le procédé de synthèse est décomposé en deux étapes. Dans une première étape une poudre d'hydroxyde de cobalt $Co(OH)_2$ est oxydée sous air à 120°C durant 48h pour former un composé de type oxyhydroxyde de cobalt. Puis, l'oxyhydroxyde de cobalt est mis en suspension à 80°C pendant 90h dans une solution de lithine à 50 g/L dans une proportion massique de 10 pour 1 par rapport au cobalt. Il est dit que l'utilisation du composé $Li_xCoO_2$ permet d'améliorer la recharge de l'accumulateur après que celui-ci ait été stocké pendant 14 jours à 65°C dans un état de décharge profonde. Aucune donnée de durée de vie n'est décrite dans ce brevet.

Dans la publication Journal of The Electrochemical Society, 152(6) A1248-A1264 (2005), il est dit qu'un composé de type $Li_xCoO_2$ est bon conducteur électronique et qu'il peut être utilisé comme additif dans l'électrode positive d'un accumulateur alcalin pour réduire la perte de capacité de l'accumulateur lorsque sa tension diminue. Les résultats de test de l'accumulateur en cyclage sont limités à 14 cycles. Le composé de type $Li_xCoO_2$ synthétisé selon le mode suivant : une poudre d'hydroxyde de cobalt est mise en suspension dans une solution de lithine à une température comprise entre 70 et 95°C, pendant une durée comprise entre 3h et 48h.

Dans la demande de brevet EP-A-1 022 793, il est proposé d'utiliser un oxyde lithié de nickel et de cobalt $Li_xNi_yCo_{1-y}O_2$ avec x compris entre 0,1 et 1, et y compris entre 0,02 et 0,9 et dont la stabilité est très fortement améliorée par rapport aux composés antérieurs. L'utilisation d'un tel composé dans l'électrode résout le problème technique lié aux pertes de capacités en stockage. Toutefois, l'ajout d'un tel composé dans l'électrode positive réduit considérablement la durée de vie de l'accumulateur. Dans ce document, le composé de type $Li_xNi_yCo_{1-y}O_2$ est fabriqué selon le procédé suivant : une poudre d'hydroxyde mixte de nickel et de cobalt est oxydée en oxyhydroxyde mixte de nickel et de cobalt par une solution de NaOCl durant 2h à 20°C. Puis l'oxyhydroxyde mixte de nickel et de cobalt est mis en suspension dans une solution de lithine LiOH à 90°C durant 72h.

On recherche donc un accumulateur alcalin présentant une durée de vie améliorée en cyclage et une perte de capacité en stockage faible.

L'article « A new solution combustion route to synthesize LiCoO2 and LiMn2O4 » publié dans Journal of Power Sources 111 (2002) 232-238 décrit une nouvelle méthode de synthèse de matériaux pour cathodes au lithium, en particulier $LiCoO_2$ et $LiMn_2O_4$, à partir des composés nitrates correspondant, en utilisant l'amidon comme assistant de combustion.

L'article « Low-temperature preparation of ultrafine LiCoO2 powders by the sol-gel method » publié dans Journal of Materials Science 32 (1997) 3177-3182 décrit un procédé de préparation d'une poudre de $LiCoO_2$ à basse température par la méthode sol-gel à partir de nitrates métalliques en utilisant l'acide maléique comme agent chélatant.

L'article « Synthesis of ultrafine LiCoO2 powders by the sol-gel method » publié dans Journal of Materials Science 31 (1996) 3617-3621 décrit un procédé de préparation d'une poudre de $LiCoO_2$ à basse température par la méthode sol-gel à partir de nitrates métalliques en utilisant l'acide polyacrylique comme agent chélatant.

Le document US 2004/0175618 décrit un accumulateur au lithium comprenant une électrode positive comprenant des particules d'un oxyde lithié de métaux de transition sous la forme de particules secondaires ayant une longueur de 5 à 15 microns, formées d'une agrégation de particules primaires de tailles comprises entre 0,1 et 1 microns. Ce composé est obtenu par calcination à l'air ou sous oxygène d'un mélange comprenant un composé de cobalt et un matériau lithié.

Le document US 2004/0091778 décrit un accumulateur au lithium comprenant une électrode positive comprenant des particules d'un oxyde lithié de métaux de transition de formule générale $LiNi_{1-(x+y)}Co_xM_yO_2$ avec $0,1 \leq x \leq 0,35$ et $0,03 \leq y \leq 0,2$ et M est choisi parmi Al, Ti et Sn. Ce composé est obtenu par chauffage d'un hydroxyde de nickel pour obtenir un oxyde de nickel que l'on fait ensuite réagir avec un composé de lithium à haute température.

Les documents JP 2008-103308 et JP 2005-123180 décrivent des poudres d'oxyde composite de lithium-nickel-manganèse-cobalt utilisées comme matière active pour électrode positive d'un accumulateur au lithium. Ces composés sont obtenus par pulvérisation à sec d'une suspension contenant les ingrédients de base puis calcination du produit résultant sous atmosphère d'oxygène.

Le document EP-A-1 927 581 décrit un accumulateur au lithium comprenant une électrode positive comprenant des particules d'un oxyde lithié de formule générale $Li_{1+x}(Mn_{1-n-m}Ni_mTi_n)_{1-x}O_2$ avec $0 < x \leq 0,33$ et $0,03 < m < 0,3$ et $0,3 < n < 0,5$. Ces composés sont obtenus par formation d'un précipité via alcalinisation d'un mélange des ingrédients de base, suivie d'un traitement hydrothermique du précipité obtenu en présence d'un agent oxydant et d'un composé de lithium hydrosoluble, et finalement calcination du produit obtenu en présence d'un composé de lithium.

L'article « LiCoO2 sub-microns particles obtained from micro-precipitation in molten stearic acid » publié dans Journal of Power Sources 124 (2003) 118-123 décrit la préparation de particules de $LiCoO_2$ par microprécipitation de sels de lithium et de cobalt dans l'acide stéarique fondu.

Le document JP 10-001316 décrit des oxydes multiples à base de lithium et de cobalt utilisés pour la préparation d'électrodes positives pour accumulateur au lithium. Ces composés sont obtenus par dispersion d'oxohydroxyde de cobalt et d'un composé spécifique dans une solution aqueuse de lithine puis traitement du mélange à haute température.

Le document EP-A-1 111 701 décrit une électrode au nickel non frittée pour accumulateur à électrolyte alcalin comportant un collecteur de courant et une pâte comprenant une matière active pulvérulente à base d'hydroxyde de nickel, un matériau conducteur contenant du lithium et du cobalt et un liant.

Le document US 6 017 655 décrit une électrode positive comprenant de l'hydroxyde de nickel et un additif constitué d'un composé sélectionné dans le groupe formé par de l'oxyde de cobalt et de calcium, de l'oxyde de titane et de calcium, de l'oxyde de molybdène et de calcium, de l'oxyde de cobalt et de lithium et leurs mélanges.

Les documents JP 11-260359 et JP 11-238507 décrivent des accumulateurs alcalins comprenant une électrode positive contenant de l'hydroxyde de nickel pulvérulent comme constituant principal ainsi qu'un oxyde lithié de cobalt et de nickel et un métal ou un oxyde de métal comme additifs.

Le document JP 09-259878 décrit une électrode au nickel non-frittée pour pile alcaline comprenant un oxyde lithié de cobalt déposé sur la surface d'un composé de type hydroxyde de nickel.

Dans les documents cités ci-dessus, la durée de synthèse de l'additif conducteur est supérieure ou égale à 3 heures. On recherche donc également un procédé rapide de synthèse d'un oxyde lithié d'un métal de transition, c'est-à-dire d'une durée inférieure à 3h.

RESUME DE L'INVENTION

L'objet de l'invention est une électrode positive d'accumulateur à électrolyte alcalin comprenant un hydroxyde à base de nickel et un oxyde lithié de formule $Li_xMO_2$ où M représente au moins un métal de transition, avec $0,1 \leq x \leq 1$, ledit oxyde lithié possédant une surface spécifique (encore appelée surface développée) mesurée par la technique BET inférieure à 40 $m^2/g$ et une granulométrie inférieure à 1 $\mu$m.

Un accululateur à électrolyte alcalin contenant ladite électrode positive présente une durée de vie en stockage et en cyclage améliorées.

Selon un mode de réalisation, l'oxyde lithié a pour formule $Li_xNi_yCo_{1-y}O_2$, où $0,1 \leq x \leq 1$ et $0 \leq y \leq 0,9$.

Selon un mode de réalisation, x est supérieur ou égal à 0,5, de préférence supérieur ou égal à 0.8.

Selon un mode de réalisation, y est inférieur à 0,2, de préférence inférieur à 0,1, de préférence encore inférieur à 0,05.

Selon un mode de réalisation, la surface spécifique est inférieure ou égale à 30 $m^2$/g, de préférence inférieure ou égale à 20 $m^2$/g, de préférence inférieure ou égale à 15 $m^2$/g, de préférence inférieure ou égale à 10 $m^2$/g.

Selon un mode de réalisation, la surface BET est supérieure à 5 $m^2$/g.

Selon un mode de réalisation, la granulométrie est inférieure à 0,9 $\mu$m.

Selon un mode de réalisation, l'électrode comprend un mélange d'une poudre de l'oxyde lithié décrit précédemment avec une poudre d'un hydroxyde à base de nickel.

Selon un mode de réalisation, l'électrode comprend une poudre d'hydroxyde de nickel, dans laquelle les grains d'hydroxyde de nickel sont recouverts de l'oxyde lithié décrit précédemment.

L'invention a également pour objet un accumulateur comprenant une électrode telle que décrite précédemment.

Il est également décrit un procédé spécialement conçu pour la fabrication de l'oxyde lithié d'au moins un métal de transition décrit précédemment. Ce procédé comprend les étapes consistant à :

a) fournir une poudre d'hydroxyde dudit au moins un métal de transition,
b) mettre la poudre en suspension dans une solution de lithine (LiOH) en présence d'un courant d'un oxydant gazeux afin de former un oxyde lithié dudit au moins un métal de transition, la concentration en lithine étant au moins égale à environ 1 mol/L,
c) ajouter à la suspension de l'étape b) une solution contenant un composé oxydant,
d) filtrer la suspension,
e) laver et sécher la suspension.

Ce procédé permet la préparation d'un oxyde lithié d'au moins un métal de transition possédant une surface spécifique mesurée par BET, inférieure à 40 $m^2$/g et une granulométrie inférieure à 1$\mu$m.

Selon un mode de réalisation, la somme des durées des étapes b) et c) est inférieure à 3 heures, de préférence inférieure ou égale à 1h30.

Selon un mode de réalisation, la température de la solution de lithine de l'étape b) est comprise entre 70 et 105°C, de préférence entre 70 et 95°C.

Selon un mode de réalisation, le rapport molaire de lithine sur l'hydroxyde dudit au moins un métal de transition est supérieur ou égal à 1, de préférence de 1 à 3.

Selon un mode de réalisation, le ratio molaire du composé oxydant de l'étape c) sur l'oxyde lithié dudit au moins un métal de transition est compris entre 5% et 100%, de préférence entre 15 et 50%.

EXPOSE DETAILLE DES MODES DE REALISATION

Le matériau conducteur utilisé dans l'électrode positive d'accumulateur à électrolyte alcalin est un oxyde lithié d'au moins un métal de transition, dont la surface spécifique est inférieure à 40 $m^2$/g, de préférence, inférieure ou égale à 30 $m^2$/g, de préférence encore, inférieure ou égale à 20 $m^2$/g.

L'oxyde lithié d'au moins un métal de transition est utilisé sous la forme d'une poudre dont la granulométrie, c'est-à-dire le diamètre moyen des particules (ou grains) constituant la poudre, est inférieure à 1$\mu$m. De préférence, on utilise une poudre d'oxyde lithié dont la granulométrie est inférieure à 0,9 $\mu$m. De préférence encore, la granulométrie est inférieure ou égale à 0,7 $\mu$m.

Ledit au moins un métal de transition est choisi de préférence dans le groupe comprenant le nickel, le cobalt, le manganèse, l'aluminium, le fer et le cuivre, ou un mélange de ceux-ci.

Selon un mode de réalisation préféré, ledit oxyde lithié d'au moins un métal de transition est un oxyde lithié de nickel et de cobalt de formule $Li_xNi_yCo_{1-y}O_2$, où $0,1 \leq x \leq 1$ et $0 \leq y \leq 0,9$. De préférence, $0,02 \leq y \leq 0,9$.

Selon un mode de réalisation, x est supérieur ou égal à 0,50.

Selon un mode de réalisation, x est supérieur ou égal à 0,80.

Selon un mode de réalisation, y est inférieur à 0,2, de préférence inférieur à 0,1, de préférence encore inférieur à 0,05.

L'oxyde lithié d'au moins un métal de transition selon l'invention est utilisé comme composé conducteur dans au moins une électrode au nickel non frittée d'un accumulateur alcalin. Ledit oxyde lithié est caractérisé par une bonne stabilité dans des conditions de stockage prolongé, c'est-à-dire un stockage d'une durée de plusieurs mois, quelles que soient les conditions de potentiel.

L'utilisation d'un oxyde lithié d'au moins un métal de transition, présentant une faible granulométrie, inférieure à 1 $\mu$m, et dont la surface spécifique est inférieure à 40$m^2$/g permet d'obtenir à la fois de bonnes performances de l'accumulateur en cyclage profond, c'est-à-dire à une profondeur de décharge d'au moins 95% de sa capacité, ainsi qu'une capacité satisfaisante après un stockage prolongé à bas potentiel. L'utilisation de cet oxyde lithié permet d'obtenir une excellente durée de vie de l'accumulateur.

Les oxydes lithiés d'au moins un métal de transition de l'art antérieur possèdent une forte surface spécifique, c'est-à-dire supérieure ou égale à 40 m$^2$/g. Un composé de type Li$_x$CoO$_2$ avec x allant de 0,2 à 0,9, tel que décrit dans EP-A-0 866 510, a été reproduit par la Demanderesse en utilisant les conditions opératoires décrites dans ce document. Le composé obtenu présente une forte surface spécifique : 72 m$^2$/g et une granulométrie inférieure ou égale à 1 μm.

De même, le composé de formule LiCoO$_2$, décrit dans la publication Journal of The Electrochemical Society, 152(6) A1248-A1264, (2005), a été reproduit par la Demanderesse en utilisant les conditions opératoires décrites dans ce document. Le composé obtenu présente une surface spécifique de l'ordre de 50 m$^2$/g et une granulométrie allant de 0,1 à 0,2 μm.

De même, un composé de formule Li$_x$Ni$_y$Co$_{1-y}$O$_2$, où x est compris entre 0,1 et 1 et y est compris entre 0,02 et 0,9, tel que décrit dans EP-A-1 022 793 a été reproduit par la Demanderesse en utilisant les conditions opératoires décrites dans ce document. Le composé obtenu dans ces conditions de synthèse présente une surface spécifique de 63 m$^2$/g et une granulométrie inférieure à 0,7 μm.

Aucun des oxydes préparés selon les procédés décrits dans ces trois références ne possède à la fois une faible surface spécifique, c'est-à-dire inférieure à 40 m$^2$/g, et une faible granulométrie, c'est-à-dire inférieure à 1 μm. Tous ont une granulométrie inférieure ou égale à 1 μm mais aucun ne présente une surface spécifique inférieure à 40 m$^2$/g. Sans vouloir être lié par la théorie, la Demanderesse pense qu'en raison de leur surface spécifique élevée, de tels composés, ajoutés au sein de l'électrode positive, absorbent une quantité importante d'électrolyte au détriment du séparateur et de l'électrode négative. L'assèchement du séparateur et de l'électrode négative qui en résulte conduit à une réduction de la durée de vie de l'accumulateur alcalin. Il

Il est également décrit un procédé original et rapide de fabrication d'un composé d'oxyde lithié d'au moins un métal de transition. Ce procédé permet de fabriquer une poudre d'un oxyde lithié d'au moins un métal de transition présentant une faible granulométrie, inférieure à 1 μm, une faible surface spécifique, c'est-à-dire inférieure à 40 m$^2$/g et une bonne conductivité électronique, de préférence supérieure ou égale à 0,1 S/cm. Un autre avantage de ce procédé réside dans le fait que la synthèse de l'oxyde est réalisée à basse température avec une durée courte, inférieure à 3 heures.

Le procédé de fabrication de l'oxyde lithié d'au moins un métal de transition comprend les étapes suivantes :

a) On fournit une poudre d'hydroxyde d'au moins un métal de transition, de préférence un hydroxyde mixte de nickel et de cobalt,

b) Cette poudre est mise en suspension sous agitation mécanique dans une solution alcaline chauffée comprenant de la lithine à une concentration au moins égale à environ 1 mol/L. La mise en suspension est réalisée en présence d'un courant de gaz oxydant (bullage). De préférence, le gaz oxydant est choisi parmi l'oxygène, l'ozone ou l'air, de préférence l'oxygène.

c) Le bullage est stoppé. Une solution oxydante est ajoutée au milieu réactionnel. De préférence, la solution oxydante est choisie dans le groupe comprenant l'hypochlorite de sodium, l'hypochlorite de calcium et le peroxyde d'hydrogène (eau oxygénée). De préférence, l'hypochlorite de sodium est utilisé.

d) La poudre d'oxyde lithié dudit au moins un métal de transition est filtrée,

e) La poudre d'oxyde lithié dudit au moins un métal de transition est lavée et séchée.

La durée de synthèse, c'est-à-dire la somme des durées des étapes b) et c), est inférieure à 3 heures.

La concentration de la solution de lithine est supérieure ou égale à 1 mol/L, de préférence de 1 à 5 mol/L, de préférence encore de 2 à 5 mol/L. Le ratio molaire de la lithine sur l'hydroxyde dudit au moins un métal de transition est supérieur à 1, de préférence entre 1 et 3.

La température de la solution de lithine est de préférence comprise entre 70 et 105°C, de préférence encore entre 70 et 95°C.

Le ratio molaire de l'oxydant sur l'hydroxyde lithié dudit au moins un métal de transition est en général compris entre 5% et 100%, de préférence entre 15% et 50%.

Le temps de bullage est généralement compris entre 30 minutes et 150 minutes, de préférence entre 60 et 120 minutes.

L'oxyde lithié d'au moins un métal de transition obtenu par le procédé selon le premier mode de réalisation peut avoir la formule Li$_x$Ni$_y$Co$_{1-y}$O$_2$, où $0,1 \leq x \leq 1$ et $0 \leq y \leq 0,9$. De préférence, $0,02 \leq y \leq 0,9$. Il peut éventuellement contenir du sodium en une quantité inférieure à 5% atomique. Sa conductivité est de préférence supérieure à $10^{-1}$ S.cm$^{-1}$.

Une fois lavé et séché, l'oxyde lithié dudit au moins un métal de transition se présente sous forme d'une poudre.

Selon un premier mode de réalisation, la poudre de l'oxyde lithié dudit au moins un métal de transition est mélangé à une poudre de matière active, en une quantité comprise typiquement entre 5 et 12% en poids par rapport au poids de la pâte sèche, de préférence entre 5 à 9%.

La matière électrochimiquement active est un hydroxyde à base de nickel. On entend par "hydroxyde à base de nickel" un hydroxyde de nickel, un hydroxyde contenant principalement du nickel, mais également un hydroxyde de nickel contenant au moins un hydroxyde syncristallisé d'un élément choisi parmi le zinc (Zn), le cadmium (Cd), le magnésium (Mg) et l'aluminium (Al), et au moins un hydroxyde syncristallisé d'un élément choisi parmi le cobalt (Co), le manganèse (Mn), l'aluminium (Al), l'yttrium (Y), le calcium (Ca), le zirconium (Zr), le cuivre (Cu). Un hydroxyde syncristallisé contenu dans l'hydroxyde de nickel est un hydroxyde formant une solution solide avec l'hydroxyde de nickel, i.e. occupant, en proportion continûment variable, les sites atomiques définis par le réseau cristallin de l'hydroxyde de nickel.

On ajoute au mélange comprenant la poudre d'oxyde lithié et la poudre de matière active, un liant, un épaississant et de l'eau pour former une pâte. Cette pâte est ensuite déposée sur un support conducteur. L'ensemble est comprimé et séché pour obtenir une électrode de la densité et de l'épaisseur souhaitée. L'électrode ainsi obtenue est utilisée comme électrode positive d'un accumulateur à électrolyte alcalin.

Le liant comprend au moins un composé choisi parmi un copolymère de styrène et de butadiène (SBR) éventuellement carboxylé, un copolymère d'acrylonitrile et de butadiène (NBR), un copolymère de styrène, d'éthylène, de butylène et de styrène (SEBS), un terpolymère de styrène, de butadiène et de vinylpyridine (SBVR), le polyamide (PA), un polyéthylène (PE), un copolymère de type éthylène - acétate de vinyle (EVA), un polymère à fonction acrylate de type polyacrylate, styrène-acrylate, Styrene-maléique anhydride, un polytétrafluoroéthylène (PTFE), un copolymère fluoré d'éthylène et de propylène (FEP), le polyhexafluoropropylène (PPHF), et le perfluorométhylvinylether (PMVE).

L'épaississant peut être choisi parmi la carboxyméthylcellulose (CMC), l'hydroxyéthylcellulose (HEC), l'hydroxypropyl-méthylcellulose (HPMC), l'hydroxypropylcellulose (HPC), un polyacideacrylique PAAc, une gomme Xanthane.

La pâte peut contenir en outre au moins un composé choisi parmi les composés du zinc comme ZnO ou Zn(OH)$_2$, les composés de l'yttrium comme Y$_2$O$_3$ ou Y(OH)$_3$, les composés de l'ytterbium comme Yb$_2$O$_3$ ou Yb(OH)$_3$, les composés du niobium comme Nb$_2$O$_5$, les composés du strontium comme SrSO$_4$ et les composés du calcium comme CaO, Ca(OH)$_2$. Ce composé est habituellement ajouté sous forme pulvérulente.

Des fibres conductrices ou non conductrices peuvent être rajoutées dans l'électrode. De préférence, la quantité de fibres ajoutées est inférieure à 1,5% du poids de la pâte sèche. De préférence, il s'agira de fibres polymères de polypropylène par exemple, de diamètre compris entre 10 et 35$\mu$m et de longueur inférieure à 2mm.

Le collecteur de courant peut être un support conducteur bidimensionnel, comme un feuillard plein ou perforé, un métal déployé, une grille ou un tissu, ou un support conducteur tridimensionnel poreux comme un feutre ou une mousse. Ce support peut être à base de métal ou de carbone.

Selon un second mode de réalisation, l'oxyde lithié d'au moins un métal de transition forme un revêtement autour des grains de matière active. La surface spécifique dudit oxyde lithié, mesurée par BET, est de préférence inférieure ou égale à 15 m$^2$/g, de préférence encore inférieure ou égale à 10 m$^2$/g. L'oxyde lithié est conducteur et résiste au stockage à bas potentiel.

Il est exposé dans ce qui suit les étapes du procédé de fabrication d'un hydroxyde à base de nickel dont la surface des grains est recouverte d'oxyde lithié d'au moins un métal de transition selon l'invention.
Le procédé comprend les étapes suivantes :

a) On fournit une poudre d'hydroxyde à base de nickel dont la surface est recouverte d'hydroxyde d'au moins un métal de transition, de préférence un hydroxyde mixte de nickel et de cobalt,
b) Cette poudre est mise en suspension sous agitation mécanique dans une solution alcaline chauffée comprenant de la lithine à une concentration au moins égale à environ 1 mol/L. La mise en suspension est réalisée en présence d'un courant de gaz oxydant (bullage). De préférence, le gaz oxydant est choisi parmi l'oxygène, l'ozone ou l'air, de préférence l'oxygène.
c) Le bullage est stoppé. Une solution oxydante est ajoutée au milieu réactionnel. De préférence, la solution oxydante est de l'eau oxygénée.
d) La poudre d'hydroxyde à base de nickel recouverte dudit oxyde lithié d'au moins un métal de transition est filtrée,
e) La poudre d'hydroxyde à base de nickel recouverte dudit oxyde lithié d'au moins un métal de transition est lavée et séchée.

La concentration de la solution de lithine est supérieure ou égale à 1 mol/L, de préférence de 1 à 5 mol/L, de préférence entre 2 et 5 mol/L. Le ratio molaire de la lithine sur l'hydroxyde d'au moins un métal de transition est de 1 à 7, de préférence de 1 à 3, de préférence encore de 1 à 2.

La température de la solution de lithine est de préférence comprise entre 70 et 105°C, de préférence encore entre 70 et 95°C.

Le ratio molaire de l'oxydant sur l'hydroxyde lithié dudit au moins un métal de transition est en général compris entre 5% et 100%, de préférence entre 15% et 50%.

Dans ce second mode de réalisation, le temps de bullage est généralement compris entre 30 minutes et 120 minutes, de préférence entre 30 et 70 minutes.

La durée de synthèse, c'est-à-dire la somme des durées des étapes b) et c), est inférieure à 3 heures. Ce procédé est donc rapide.

Ledit oxyde lithié d'au moins un métal de transition formant un revêtement autour des grains de matière active, est de préférence un oxyde lithié de nickel et de cobalt de formule $Li_xNi_yCo_{1-y}O_2$, où $0,1 \leq x \leq 1$ et $0 \leq y \leq 0,9$. De préférence, $0,02 \leq y \leq 0,9$.

Une fois lavé et séché, l'hydroxyde à base de nickel recouvert dudit oxyde lithié d'au moins un métal de transition, sous forme de poudre, est mélangé à un liant, à un épaississant et à de l'eau pour former une pâte. Cette pâte est déposée sur un support conducteur collecteur de courant. L'ensemble est comprimé et séché pour obtenir une électrode de la densité et de l'épaisseur souhaitée. L'électrode ainsi obtenue est utilisée comme électrode positive d'un accumulateur à électrolyte alcalin.

Le liant, l'épaississant, le collecteur de courant peuvent être choisis comme dans le premier mode de mise en oeuvre du procédé.

Dans un troisième mode de réalisation, une poudre d'hydroxyde à base de nickel dont les grains sont revêtus d'oxyde lithié d'au moins un métal de transition est mélangée à une poudre d'oxyde lithié d'au moins un métal de transition.

L'électrode selon l'invention peut être utilisée dans tout accumulateur à électrolyte alcalin, comme par exemple les accumulateurs contenant les couples nickel métal hydrurable, nickel cadmium, nickel fer, nickel zinc, nickel hydrogène.

D'autres caractéristiques et avantages de la présente invention apparaîtront à la lecture des exemples suivants :

EXEMPLES

On décrit dans l'exemple suivant la méthode de mesure de la surface spécifique BET.

La surface spécifique des différentes poudres est mesurée comme suit. On prélève un échantillon de poudre dont la masse est comprise entre 0,1 et 1g. Pour une bonne précision de mesure, il faut une surface spécifique d'au moins environ 1m$^2$/g. On utilise une cellule de 10 cm$^3$. On pèse l'ensemble de la cellule de mesure. Puis on ajoute l'échantillon dans la cellule. On pèse l'ensemble. On met en place la cellule de mesure sur un poste de dégazage et on dégaze l'échantillon pendant 12 heures à 120°C. La cellule est rapidement bouchée avec un bouchon après le dégazage. On pèse l'ensemble après retour de la température à l'ambiante et on note le résultat. Toutes les pesées sont effectuées sans le bouchon. La masse de l'échantillon est obtenue par soustraction de la masse de la cellule à la masse de la cellule + échantillon dégazé.

L'analyse de l'échantillon est ensuite réalisée à l'aide d'un analyseur Belsorp Mini de Bel Japan Inc. La mesure repose sur l'adsorption d'azote par l'échantillon à une température donnée, ici la température de l'azote liquide, soit -196°C. L'appareil mesure la pression de la cellule de référence dans laquelle l'adsorbat est à sa pression de vapeur saturante et celle de la cellule de l'échantillon dans laquelle des volumes connus d'adsorbat sont injectés. La courbe résultant de ces mesures est l'isotherme d'adsorption. Dans le processus de mesure, la connaissance du volume mort de la cellule est nécessaire : une mesure de ce volume est donc réalisée avec de l'hélium avant l'analyse.

La masse de l'échantillon calculée précédemment est entrée en tant que paramètre. La surface BET est déterminée par le logiciel par régression linéaire à partir de la courbe expérimentale. L'écart-type de reproductibilité obtenu à partir de 5 mesures sur une poudre de surface spécifique 65 m$^2$/g est de 2,5. Deux fois par an, un contrôle est réalisé avec une poudre de référence, ici l'alumine de référence micrometrics 16822.

Exemple 1 (hors de l'invention) :

Un accumulateur étanche nickel métal hydrurable Ni MH de format AA et dont la capacité nominale C est de 1200mAh est fabriqué de la manière suivante.

L'électrode positive est réalisée avec une pâte ayant comme composition pondérale (exprimée en % par rapport au poids de la pâte sèche) :

| | |
|---|---|
| matière électrochimiquement active | 92,7% |
| matériau conducteur | 6% |
| liant | 1% |
| épaississant | 0,3% |

La matière électrochimiquement active pulvérulente est constituée d'un hydroxyde à base de nickel. Le matériau conducteur est une poudre d'hydroxyde de cobalt. Le liant est du polytétrafluoroéthylène (PTFE). L'épaississant est le sel de sodium de la carboxyméthylcellulose (CMC). La viscosité de la pâte est ajustée avec de l'eau. La pâte est introduite dans le support conducteur servant de collecteur de courant qui est une mousse de nickel de porosité environ 95%. Une fois la pâte introduite dans le support, l'ensemble est séché afin d'en éliminer l'eau, puis laminé pour obtenir l'électrode.

L'électrode négative a comme matière électrochimiquement active un composé intermétallique capable de former un hydrure une fois chargé. Sa capacité est supérieure à celle de l'électrode positive. Chaque électrode positive est accolée à une électrode négative dont elle est isolée par un séparateur constitué d'un non tissé de polypropylène pour former le faisceau électrochimique. Le faisceau spiralé est inséré dans un godet métallique et imprégné d'un électrolyte alcalin qui est une solution alcaline aqueuse constituée d'un mélange d'hydroxyde de potassium KOH 7,4 mol/L, d'hydroxyde de lithium LiOH 0,5 mol/L et d'hydroxyde de sodium NaOH 0,4 mol/L.

On réalise de la manière décrite précédemment un accumulateur A dont l'électrode positive contient comme matériau conducteur, un hydroxyde de cobalt $Co(OH)_2$.

Exemple 2 (hors de l'invention) :

On réalise un **accumulateur B** de la manière décrite dans l'exemple 1, mais dont l'électrode positive contient de l'hydroxyde de nickel dont la surface est recouverte de $Co(OH)_2$ à la place d'un mélange de poudres d'hydroxyde de nickel et d'hydroxyde de cobalt. La composition pondérale de la pâte sèche contenue dans cette électrode est la suivante :

| | |
|---|---|
| $Ni(OH)_2$ dont la surface est recouverte de $Co(OH)_2$ : | 98,7% |
| liant | 1% |
| épaississant | 0,3% |

Exemple 3 (dans le domaine de l'invention) :

On réalise un **accumulateur C** de la manière décrite dans l'exemple 1, mais dont l'électrode positive contient comme matériau conducteur une poudre conductrice de type $Li_xCoO_2$. Ce matériau conducteur est fabriqué de la manière suivante : dans un réacteur en inox isolé thermiquement et équipé d'une résistance chauffante, d'un agitateur trois pâles et d'un filtre à gaz, de l'hydroxyde de cobalt en poudre est mis en suspension dans une solution de lithine à 5 mol/L qui est chauffée à 85°C. Le ratio molaire LiOH sur $Co(OH)_2$ est de 7 pour 1. Un bullage d'oxygène à travers le filtre à gaz est introduit dans la suspension sous agitation. Le débit d'oxygène est stoppé après 1 heure de réaction. Une solution d'hypochlorite de sodium à 1,5 mol/L est ensuite ajoutée dans le réacteur à température ambiante, de manière à ce que le ratio molaire NaOCl sur $LiCoO_2$ soit de 20%. Après une demie heure, la poudre de $Li_xCoO_2$ est récupérée par centrifugation. La durée totale pour synthétiser le matériau est de 1h30. Le matériau synthétisé est ensuite lavé à l'eau désionisée et séché. Par analyse élémentaire, on constate que x est égal à 0,8. La taille moyenne des particules est de 0,7 $\mu$m et la conductivité du produit mesurée sous presse (1,15 tonne/cm$^2$) est de 1,2 S/cm. La surface spécifique est de 32m$^2$/g.

Exemple 4 (dans le domaine de l'invention) :

On réalise un **accumulateur D** de la manière décrite dans l'exemple 2, mais dont l'électrode positive contient de l'hydroxyde de nickel dont la surface est recouverte d'un matériau conducteur de type $Li_xCoO_2$. Cet hydroxyde de nickel a été obtenu de la manière suivante : dans un réacteur en inox isolé thermiquement et équipé d'une résistance chauffante, d'un agitateur trois pâles et d'un filtre à gaz, de l'hydroxyde de nickel dont la surface est recouverte d'hydroxyde de cobalt est mis en suspension dans une solution de lithine à 5 mol/L qui est chauffée à 85°C. Le ratio molaire LiOH sur $Co(OH)_2$ est de 7 pour 1. Un bullage d'oxygène à travers le filtre à gaz est introduit dans la suspension sous agitation. Le débit d'oxygène est stoppé après 1 heure de réaction. Une solution d'eau oxygénée est ensuite ajoutée dans le réacteur à température ambiante, de manière à ce que le ratio molaire $H_2O_2$ sur $LiCoO_2$ soit de 40%. Après une demie heure, la poudre d'hydroxyde de nickel dont la surface est recouverte de $Li_xCoO_2$ est récupérée par centrifugation. La durée totale pour synthétiser le matériau est de 1h30. Le matériau synthétisé est ensuite lavé à l'eau désionisée et séché. Par analyse élémentaire, on constate que x est égal à 0,8. La conductivité du matériau, mesurée sous presse (1,15 tonne/cm$^2$) est de 0,31 S/cm. La surface spécifique est de 15m$^2$/g.

Exemple 5 (dans le domaine de l'invention) :

On réalise un **accumulateur E** de la manière décrite dans l'exemple 1, mais dont l'électrode positive contient comme matériau conducteur une poudre conductrice de type $Li_xNi_{0,03}Co_{0,97}O_2$. Ce matériau conducteur est fabriqué de la manière suivante : dans un réacteur en inox isolé thermiquement et équipé d'une résistance chauffante, d'un agitateur trois pâles et d'un filtre à gaz, de l'hydroxyde de nickel et de cobalt en poudre est mis en suspension dans une solution de lithine à 5 mol/L qui est chauffée à 85°C. Le ratio molaire LiOH sur $Ni_{0,03}Co_{0,97}(OH)_2$ est de 7 pour 1. Un bullage d'oxygène à travers le filtre à gaz est introduit dans la suspension sous agitation. Le débit d'oxygène est stoppé après 1 heure de réaction. Une solution d'hypochlorite de sodium à 1,5 mol/L est ensuite ajoutée dans le réacteur à température ambiante, de manière à ce que le ratio molaire NaOCl sur $Li_xNi_{0,03}Co_{0,97}O2$ soit de 20%. Après une demie heure, la poudre de $Li_xNi_{0,03}Co_{0,97}O_2$ est récupérée par centrifugation. La durée totale pour synthétiser le matériau est de 1h30. Le matériau synthétisé est ensuite lavé à l'eau désionisée et séché. Par analyse élémentaire, on constate que x est égal à 0,8. La taille moyenne des particules est de 0,65 $\mu$m et la conductivité du produit mesurée sous presse (1,15 tonne/cm$^2$) est de 0,8 S/cm. La surface spécifique est de 35 m$^2$/g.

Exemple 6 (en dehors de l'invention) :

On réalise un **accumulateur F** de la manière décrite dans l'exemple 1, mais dont l'électrode positive contient comme matériau conducteur une poudre conductrice de type $Li_xCoO_2$. Ce matériau conducteur est fabriqué de la manière suivante : dans un réacteur en inox isolé thermiquement et équipé d'une résistance chauffante, d'un agitateur trois pâles et d'un filtre à gaz, de l'hydroxyde de cobalt en poudre est mis en suspension dans une solution de lithine à 0,5 mol/L qui est chauffée à 50°C. La concentration de la solution de lithine est inférieure à 1 mol/L donc insuffisante. Le ratio molaire LiOH sur $Co(OH)_2$ est de 2 pour 1. Un bullage d'air à travers le filtre à gaz est introduit dans la suspension sous agitation. Le débit d'air est stoppé après 1 heure de réaction. Une solution d'hypochlorite de sodium à 1,5 mol/L est ensuite ajoutée dans le réacteur à température ambiante, de manière à ce que le ratio molaire NaOCl sur $LiCoO_2$ soit de 20%. Après une demie heure, la poudre de $Li_xCoO_2$ est récupérée par centrifugation. La durée totale pour synthétiser le matériau est de 1h30. Le matériau synthétisé est ensuite lavé à l'eau désionisée et séché. Par analyse élémentaire, on constate que x est égal à 0,7. La taille moyenne des particules est de 0,7 $\mu$m et la conductivité du produit mesurée sous presse (1,15tonne/cm$^2$) est de 0,003 S/cm. La surface spécifique est de 75 m$^2$/g.

Exemple 7 (en dehors de l'invention) :

On réalise un **accumulateur G** de la manière décrite dans l'exemple 1, mais dont l'électrode positive contient comme matériau conducteur une poudre conductrice de type $Li_xCoO_2$. Ce matériau conducteur est fabriqué de la manière suivante : dans un réacteur en inox isolé thermiquement et équipé d'une résistance chauffante, d'un agitateur trois pâles et d'un filtre à gaz, de l'hydroxyde de cobalt en poudre est mis en suspension dans une solution de lithine à 0,7 mol/L qui est chauffée à 72°C. La concentration de la solution de lithine est inférieure à 1 mol/L, donc insuffisante. Le ratio molaire LiOH sur $Co(OH)_2$ est de 3 pour 1. Un bullage d'oxygène à travers le filtre à gaz est introduit dans la suspension sous agitation. Le débit d'oxygène est stoppé après 1 heure de réaction. Une solution d'hypochlorite de sodium à 1,5 mol/L est ensuite ajoutée dans le réacteur à température ambiante, de manière à ce que le ratio molaire NaOCl sur $LiCoO_2$ soit de 20%. Après une demie heure, la poudre de $Li_xCoO_2$ est récupérée par centrifugation. La durée totale pour synthétiser le matériau est de 1h30. Le matériau synthétisé est ensuite lavé à l'eau désionisée et séché. Par analyse élémentaire, on constate que x est égal à 0,8. La taille moyenne des particules est de 0,6 $\mu$m et la conductivité du produit mesurée sous presse (1,15 tonne/cm$^2$) est de 0,8 S/cm. La surface spécifique est de 62 m$^2$/g.

Exemple 8 (en dehors de l'invention) :

On réalise un **accumulateur H** de la manière décrite ci-dessus, mais dont l'électrode positive contient comme matériau conducteur une poudre conductrice de type $Li_xCoO_2$. Ce matériau conducteur est fabriqué selon le mode de réalisation du document EP-A-1 022 793. Une poudre d'hydroxyde de nickel contenant 50% d'hydroxyde de cobalt est préparée selon le procédé suivant : Dans un réacteur de précipitation maintenu à une température constante de 50°C, on introduit 0,5 litre d'un mélange d'une solution de sulfate de cobalt 0,5 mol/L et de sulfate de nickel 0,5 mol/L. La synthèse est réalisée sous atmosphère inerte dans le but d'éviter tout contact avec l'oxygène, afin de pallier les risques d'oxydation de l'hydroxyde de cobalt à réaliser. On y ajoute 650 g d'une solution de soude caustique à une concentration de 2 mol/L selon un débit constant et continu pendant 30 minutes. Lorsque l'ajout de soude est terminé, la solution est maintenue sous agitation et chauffage constants pendant 2 heures afin de réaliser un mûrissement des particules d'hydroxyde. Le précipité obtenu est alors filtré et lavé à température ambiante par de l'eau distillée sous atmosphère inerte. Le produit obtenu est ensuite séché sous vide pendant 24 heures à une température de 70°C, après un balayage de l'étuve par un gaz inerte. Le précipité obtenu est ensuite broyé sous atmosphère inerte à la granulométrie adéquate. On obtient un hydroxyde mixte de formule $Ni_{0,5}Co_{0,5}(OH)_2$. Cet hydroxyde mixte est mis en suspension dans une solution contenant en excès une solution d'hypochlorite de sodium à 48° pendant 2 heures à 20°C. Le produit est lavé avec de l'eau désionisée et séché à 70°C. Le composé obtenu est un oxyhydroxyde mixte de formule $Ni_{0,5}Co_{0,5}OOH$. Cet oxyhydroxyde mixte est alors mis en suspension dans une solution de LiOH 5 mol/L à 90°C pendant 72h. Le produit est lavé avec de l'eau désionisée et séché à 70°C. Le produit obtenu est un oxyde lithié de nickel et de cobalt de formule $Li_xNi_{0,5}Co_{0,5}O_2$. Par analyse élémentaire, on constate que x est égal à 1. La taille moyenne des particules est de $0,3\mu m$ et la conductivité du produit mesurée sous presse ($1,15$ tonne/cm$^2$) est de 0,8S/cm. La surface spécifique est de 78m$^2$/g.

Test électrique :

Après un repos initial de 48 heures et une charge de 20h au courant de 0,05 Ic, suivie d'une décharge à 0,2 Ic, les accumulateurs A à H sont testés électrochimiquement. Ic désigne le courant nécessaire pour décharger la capacité nominale C de l'accumulateur en 1h. Une évaluation de la perte irréversible de capacité en stockage à l'état complètement déchargé de l'accumulateur est effectuée dans les conditions suivantes :

Cycle 1 : Charge à 0,1 Ic pendant 16 heures à 20°C, décharge à 0,2 Ic jusqu'à une tension d'arrêt de 1 Volt.

Cycles 2 à 5 : Charge à Ic pendant 1,2 heures à 20°C, décharge à Ic jusqu'à une tension d'arrêt de 1 Volt.

Les accumulateurs A à H sont stockés à l'état déchargé à 40°C connectés sur une résistance de 1 Ohm pendant 3 jours. Après stockage, on effectue une mesure de capacité restante dans les conditions suivantes :

Cycles 6 à 10 : Charge à Ic pendant 1,2 heure à 20°C, décharge à Ic jusqu'à 1 Volt.

La perte de capacité due au stockage sur résistance est déterminée en rapportant la capacité mesurée au 10$^{ème}$ cycle à celle obtenue au 4$^{ème}$ cycle. Les accumulateurs sont ensuite cyclés jusqu'à ce que la capacité en décharge à Ic jusqu'à une tension d'arrêt de 1 V devienne inférieure à 80% de la capacité mesurée au cycle 4.

Les résultats obtenus sont rassemblés dans le tableau suivant.

| Générateur | A | B | C | D | E | F | G | H |
|---|---|---|---|---|---|---|---|---|
| Rendement au cycle 1 (mAh/g) | 251 | 254 | 249 | 251 | 247 | 224 | 251 | 245 |
| Rendement au cycle 4 (mAh/g) | 239 | 248 | 240 | 242 | 237 | 140 | 242 | 236 |
| Rendement au cycle 10 (mAh/g) | 189 | 218 | 238 | 241 | 235 | 139 | 239 | 235 |
| Perte de capacité lors du stockage (%) | **21** | **12** | **1** | **1** | **1** | **1** | **1** | **1** |
| Durée de vie (nombre de cycles) | **489** | **495** | **482** | **498** | **485** | **332** | **242** | **315** |

La perte de capacité des **accumulateurs C, D,** et E lors du stockage n'est que de 1%, ce qui est très faible en comparaison de la perte de capacité de 21% et 12% obtenue respectivement avec les accumulateurs A et B. La durée de vie des **accumulateurs C, D, et E** est comparable à celle des accumulateurs A et B. On comprend d'après ces résultats que l'utilisation d'un matériau de type $Li_xNi_yCo_{1-y}O_2$ comme matériau conducteur de l'électrode positive non frittée **(accumulateurs C, D,** et E), synthétisé selon le procédé tel que décrit ci-avant, permet de conserver des performances électrochimiques satisfaisantes, même après un stockage prolongé à bas potentiel et d'excellentes performances en durée de vie.

**L'accumulateur F** utilisant un oxyde de nickel et cobalt en dehors du domaine de l'invention, présente une durée de vie médiocre.

**L'accumulateur G** utilisant un oxyde de nickel et de cobalt en dehors du domaine de l'invention de par sa surface spécifique, conduit à de bonnes performances électrochimiques initiales et en stockage prolongé à bas potentiel, mais à une durée de vie extrêmement réduite.

De même, l'accumulateur H utilisant un oxyde de nickel et de cobalt réalisé selon le procédé du document EP-A-I 022 793 et qui présente une surface spécifique hors du domaine de l'invention, conduit à de bonnes performances électrochimiques initiales et en stockage prolongé à bas potentiel, mais à une durée de vie nettement réduite.

**Revendications**

**1.** Electrode positive d'accumulateur à électrolyte alcalin comprenant un hydroxyde à base de nickel et un oxyde lithié de formule $Li_xMO_2$ où M représente au moins un métal de transition,

$$0,1 \leq x \leq 1,$$

ledit oxyde lithié possédant une surface spécifique mesurée par la technique BET inférieure à 40 m$^2$/g et une granulométrie inférieure à 1 $\mu$m.

2. Electrode selon la revendication 1, comprenant un mélange d'une poudre de l'hydroxyde à base de nickel et une poudre de l'oxyde lithié de formule Li$_x$MO$_2$.

3. Electrode selon la revendication 1, dans laquelle l'hydroxyde à base de nickel est sous forme de poudre dont les grains sont recouverts de l'oxyde lithié de formule Li$_x$MO$_2$.

4. Electrode selon l'une des revendications 1 à 3, dans laquelle l'oxyde lithié Li$_x$MO$_2$ a pour formule Li$_x$Ni$_y$Co$_{1-y}$O$_2$, où

$$0,1 \leq x \leq 1,$$

$$0 \leq y \leq 0,9.$$

5. Electrode selon l'une des revendications 1 à 4, dans laquelle x est supérieur ou égal à 0,5, de préférence supérieur ou égal à 0,8.

6. Electrode selon l'une des revendications 1 à 5, dans laquelle y est inférieur à 0,2, de préférence inférieur à 0,1, de préférence encore, inférieur à 0,05.

7. Electrode selon l'une des revendications 1 à 6, dans laquelle la surface spécifique est inférieure ou égale à 30 m$^2$/g, de préférence inférieure ou égale à 20 m$^2$/g, de préférence inférieure ou égale à 15 m$^2$/g, de préférence inférieure ou égale à 10 m$^2$/g.

8. Electrode selon l'une des revendications 1 à 7, dans laquelle la surface BET est supérieure à 5 m$^2$/g.

9. Electrode selon l'une des revendications 1 à 8, dans laquelle la granulométrie est inférieure à 0,9 $\mu$m.

10. Accumulateur comprenant une électrode selon l'une des revendications 1 à 9.

**Patentansprüche**

1. Positive Elektrode eines Akkumulators mit alkalischem Elektrolyt, die ein Hydroxid auf Nickelbasis und ein Lithium-oxid der Formel Li$_x$MO$_2$ umfasst, worin
M fiir mindestens ein Übergangsmetall steht,

$$0,1 \leq x \leq 1,$$

wobei das Lithiumoxid eine mit der BET-Technik gemessene spezifische Oberfläche von weniger als 40 m$^2$/g und eine Granulometrie von weniger als 1 $\mu$m besitzt.

2. Elektrode nach Anspruch 1, die ein Gemisch eines Pulvers des Hydroxids auf Nickelbasis und eines Pulvers des Lithiumoxids der Formel Li$_x$MO$_2$ umfasst.

3. Elektrode nach Anspruch 1, wobei das Hydroxid auf Nickelbasis in Pulverform ist, dessen Körner mit dem Lithiumoxid der Formel Li$_x$MO$_2$ überzogen sind.

4. Elektrode nach einem der Ansprüche 1 bis 3, wobei das Lithiumoxid Li$_x$MO$_2$ die Formel Li$_x$Ni$_y$Co$_{1-y}$O$_2$ aufweist, worin

$$0,1 \leq x \leq 1,$$

$$0 \leq y \leq 0,9.$$

5. Elektrode nach einem der Ansprüche 1 bis 4, wobei x größer gleich 0,5, vorzugsweise größer gleich 0,8 ist.

6. Elektrode nach einem der Ansprüche 1 bis 5, wobei y kleiner als 0,2, vorzugsweise kleiner als 0,1, noch mehr bevorzugt kleiner als 0,05 ist.

7. Elektrode nach einem der Ansprüche 1 bis 6, wobei die spezifische Oberfläche kleiner gleich 30 m$^2$/g, vorzugsweise kleiner gleich 20 m$^2$/g, vorzugsweise kleiner gleich 15 m$^2$/g, vorzugsweise kleiner gleich 10 m$^2$/g ist.

8. Elektrode nach einem der Ansprüche 1 bis 7, wobei die BET-Oberfläche größer als 5 m$^2$/g ist.

9. Elektrode nach einem der Ansprüche 1 bis 8, wobei die Granulometrie kleiner als 0,9 $\mu$m ist.

10. Akkumulator, der eine Elektrode nach einem der Ansprüche 1 bis 9 umfasst.


**Claims**

1. A positive electrode for a secondary cell having an alkaline electrolyte comprising a nickel-based hydroxide and a lithiated oxide of formula Li$_x$MO$_2$ wherein
M represents at least one transition metal,

$$0.1 \leq x \leq 1,$$

said lithiated oxide having a specific surface area as measured by the BET technique of less than 40 m$^2$/g and a grain size of less than 1 $\mu$m.

2. The electrode according to claim 1, comprising a mixture of a powder of the nickel-based hydroxide and a powder of the lithiated oxide of formula Li$_x$MO$_2$.

3. The electrode according to claim 1, wherein the nickel-based hydroxide is in the form of powder, the grains of which are covered with the lithiated oxide of formula Li$_x$MO$_2$.

4. The electrode according to one of claims 1 to 3, wherein the lithiated oxide Li$_x$MO$_2$ has the formula Li$_x$Ni$_y$Co$_{1-y}$O$_2$, wherein

$$0.1 \leq x \leq 1,$$

$$0 \leq y \leq 0.9.$$

5. The electrode according to one of claims 1 to 4, wherein x is greater than or equal to 0.5, preferably greater than or equal to 0.8.

6. The electrode according to one of claims 1 to 5, wherein y is less than 0.2, preferably less than 0.1, still preferably less than 0.05.

7. The electrode according to one of claims 1 to 6, wherein the specific surface area is less than or equal to 30 m$^2$/g, preferably less than or equal to 20 m$^2$/g, preferably less than or equal to 15 m$^2$/g, preferably less than or equal to 10 m$^2$/g.

8. The electrode according to one of claims 1 to 7, wherein the BET surface area is greater than 5 m$^2$/g.

9. The electrode according to one of claims 1 to 8, wherein the grain size is less than 0.9 μm.

10. A secondary cell comprising an electrode according to one of claims 1 to 9.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0866510 A
- EP 1022793 A
- US 20040175618 A
- US 20040091778 A
- JP 2008103308 A
- JP 2005123180 A
- EP 1927581 A
- JP 10001316 A
- EP 1111701 A
- US 6017655 A
- JP 11260359 A
- JP 11238507 A
- JP 9259878 A
- EP I022793 A

### Littérature non-brevet citée dans la description

- *Journal of The Electrochemical Society,* 2005, vol. 152 (6), A1248-A1264
- A new solution combustion route to synthesize LiCoO2 and LiMn2O. *Journal of Power Sources,* 2002, vol. 111, 232-238
- Low-temperature preparation of ultrafine LiCoO2 powders by the sol-gel method. *Journal of Materials Science,* 1997, vol. 32, 3177-3182
- Synthesis of ultrafine LiCoO2 powders by the sol-gel method. *Journal of Materials Science,* 1996, vol. 31, 3617-3621
- LiCoO2 sub-microns particles obtained from micro-precipitation in molten stearic acid. *Journal of Power Sources,* 2003, vol. 124, 118-123